## Europäisches Patentamt

## European Patent Office

## Office européen des brevets

(19)

(11) Publication number: **0 221 645**

**A1**

(12)

# EUROPEAN PATENT APPLICATION

(21) Application number: **86306734.4**

(22) Date of filing: **01.09.86**

(51) Int. Cl.⁴: **H 01 M 2/16**

(30) Priority: **27.09.85 US 780764**

(43) Date of publication of application:
**13.05.87 Bulletin 87/20**

(84) Designated Contracting States:
**DE FR GB IT LU SE**

(71) Applicant: **YARDNEY CORPORATION**
**82 Mechanic Street**
**Pawcatuck Connecticut 06379(US)**

(72) Inventor: **Chireau, Roland F.**
**26 Hope Street**
**New London Connecticut 06320(US)**

(74) Representative: **Day, Jeremy John et al,**
**REDDIE & GROSE 16 Theobalds Road**
**London, WC1X 8PL(GB)**

(54) **Improved alkaline battery separator and method for making same.**

(57) An improved alkaline battery separator comprises a fibrous polyamide separator which has sufficient hydrophilic vinyl monomer grafted thereon to improve its water wettability and absorptivity in alkaline battery electrolyte. The polyamide is preferably nylon selected from the group consisting of poly-caprolactam, polyhexamethylene adipamide, and mixtures thereof. The hydrophilic vinyl monomer is preferably selected from the group consisting of acrylic acid, methyacrylic acid, N,N-dimethyl acrylamide, N-(isobutoxymethyl) acrylamide and mixtures thereof. Preferably, the separator is in a form of a mat having fibers of average diameter of about 0.5-50 microns, the mat having an overall thickness of about 5-25 mils, a porosity of more than 50% and a pore size of less than 50 microns. The method of making the separator involves contacting the polyamide with an aqueous solution of the vinyl monomer and a selected redox catalyst for a time and temperature sufficient to effect the grafting of the monomer onto the chain of the polyamide. The separator should preferably previously be scoured at an elevated temperature with a selected hydrotrope/detergent solution to improve the ease of grafting. Preferably the redox catalyst is selected from the group consisting of potassium permanganate, persulphates, ceric salts and mixtures thereof.

**EP 0 221 645 A1**

**0221645**

## IMPROVED ALKALINE BATTERY SEPARATOR
## AND METHOD FOR MAKING SAME

The present invention generally relates to alkaline battery separators and more particularly to a polyamide separator which has improved wettability and absorptivity in alkaline battery electrolyte.

Various types of alkaline battery systems have been developed in recent years. These include electrolyte pairs such as silver-zinc, nickel-cadmium, silver-cadmium, mercury-cadmium, mercury-zinc and manganese dioxide-zinc. A life-limiting factor in the design of such alkaline batteries as nickel-cadmium and silver-zinc batteries has been the life of the separators utilised therein. Nylon separators exhibit intrinsically low wettability to such a degree that battery failures occur because the separator dries out and there is low electrolyte retention. Attempts to solve this problem by adding wetting agents to the nylon separators have been unsuccessful because the wetting agents are unstable in the electrolyte. Thus, although conventional separators are fabricated either from nylon or polypropylene film which has been treated with a wetting agent, problems arise, since the wetting agent is chemically unstable in potassium hydroxide battery electrolyte.

Fibrous battery separator materials of the non-woven type are generally superior to solid film separators with respect to increased ion mobility. Such non-woven material is better suited to silver-zinc primary battery applications because dendritic formation between the electrodes is not a problem. The amide groups of nylon are very slightly polar in nature so that the nylon exhibits very low wettability and a low degree of electrolyte retention unless the fibers are coated with a wetting agent.

It would be desirable to be able to provide an improved separator material for alkaline batteries, which separator material exhibits high electrolyte absorptivity, good electrolyte retention, low specific resistivity, improved and rapid wettability and low resistance to air permeation. Wicking characteristics and wet-out time are very important with respect to the initial proper activation of the battery with electrolyte. These desirable characteristics should be provided in a controlled manner with a simple procedure. In effect, the hydrophilic properties of the polyamide separator should be significantly improved.

The present invention satisfies all of the foregoing needs. Thus, an improved separator for use in alkaline batteries is provided by the present method. The separator exhibits improved electrolyte retention, improved absorptivity, and wettability. The improvement in wettability by the electrolyte is achieved by the present method without depreciating the other characteristics of the separator.

According to the invention an improved alkaline battery separator comprises a non-woven fibrous polyamide separator having sufficient, preferably 2.5 to 7.5% by weight, hydrophilic vinyl monomer grafted onto said polyamide to improve the water wettability of said polymer in alkaline battery electrolyte, said separator having improved electrolyte absorptivity.

The method of the present invention comprises grafting onto the separator polymer chain a hydrophilic vinyl monomer by contacting the separator at elevated tempoerature with an aqueous solution of the monomer and a selected redox catalyst. The contact time is controlled to improve the hydrophilic properties of the nylon to the desired degree.The improved alkaline battery separator of the present invention comprises a mat, sheet or other unit of extended surface area of non-woven fibrous polyamide, specifically, nylon. The nylon is preferably selected from the group consisting of polycaprolactam, poly-hexamethylene adipamide, and mixtures thereof. The nylon fibers preferably have a diameter of about 0.05 to 50 microns and are preferable in the form of a mat whichis compacted and hasa thickness of about 5 - 25 mils, a porosity of more than about 50%, and a pore size of less than about 50 microns, and is free of contaminants, wetting agents and surfactants. The non-woven mat ordinarily has been cold calendered to the required thickness after the vinyl monomer has been grafter thereonto.

The nylon has been treated in accordance with the present method so that sufficient hydrophilic vinyl monomer has been grafted onto the polymer chain to improve the water wettability of the nylon in strong alkaline battery electrolyte, such as potassium hydroxide, sodium hydroxide or lithium hydroxide. Specifically, the nylon exhibits improved electrolyte absorptivity and wettability.

The hydrophilic vinyl monomer grafted onto the nylon is preferably selected from the group consisting of acrylic acid, methacrylic acid, N,N-dimethyl acrylamide, diacetone acrylamide, N-(isobutoxymethyl) acrylamide and mixtures thereof. It is estimated that approximately 2.5% to about 7.5% by weight of the treated nylon preferably consists of the vinyl monomer added to the fibers of the nylon by grafting onto the polymer chain.

The method preferably includes an initial contacting of the nylon with a selected hydrotrope-detergent solution to facilitate the ease of grafting on the vinyl monomer in the main treating step. This initial treatment removes foreign materials including those used in the constitution of the fabric, which might interfere in the grafting process. Such detergent may be, for example, selected from the group consisting of sodium dodecyl diphenyl oxide disulfonate, sodium lauryl ether sulphate, sodium tridecyl sulphate, octylphenoxy poly(ethyleneoxy) ethanol and mixtures thereof.

Typic.. contact times and temperatures are 70-80°C, and 10-30 minutes. The concentration of the hydrotrope/detergent in the aqueous solution may be, for example, about 0.15 to about 0.5% by weight.

After this preliminary step is carried out, the mat is separated from the hydrotrope/detergent aqueous solution, washed free of that solution, as by the use of deionised water at about 60°C, and then while still wet, the mat can be contacted with the

0221645

grafting solution in accordance with the present method.

The grafting solution preferably is an aqueous solution of the vinyl monomer and a suitable redox catalyst to promote the grafting. Such a catalyst may be selected from the group consisting of a salt of a metal in an oxidised state but capable of existing in more than one valence state, a complex of a metal in an oxidised state but capable of existing in more than one valence state, and mixtures thereof. Preferably, the redox catalyst is selected from the group consisting of potassium permanganate, persulphates, ceric salts and mixtures thereof.

The nylon mat or the like is immersed in the grafting solution for a time and at a temperature sufficient to effect the desired degree of grafting. For example, temperatures of about 79-80°C can be employed, along with contact times of about 30-45 minutes, preferably about 70°C for about 30 minutes. The concentration of the vinyl monomer in the aqueous grafting solution may be about 1% to about 2% and the concentration of the redox catalyst in the solution may be from about 0.2% to about 0.3%. The concentration of acid in this solution should be about 0.42% sulphuric acid or an equivalent amount of nitric acid.

Upon completion of the grafting, the nylon mat is separated from contact with the grafting solution and is washed free of homopolymers and unreacted monomer, preferably utilising a dilute aqueous solution of a surfactant such as an alkyl aryl polyether alcohol, sulphate or other conventional surfactant at an elevated temperature, preferably about 70°C. The nylon can then be washed free of this surfactant, as by deionised water at elevated temperature, for example, about 70°C and then dried in air or the like. The finished nylon mat is usually cold calendered to the desired thickness before use in primary and secondary alkaline batteries. The finished mat, after calendering may have, for example, a density of about to about 0.32g/cc.

Certain further features of the present invention are set forth in the following specific examples.

EXAMPLE I

A non-woven mat of nylon, specifically poly-caprolactam having an average fiber diameter of about 14 microns, a thickness of about 7.5 mils, (190 microns) a porosity of about 80-90% consisting of 25 pieces, 38 inches (96 cm) long and 20 inches (50 cm) wide, with an initial density of 0.18 g/cc is placed in an initial aqueous treating solution. The solution includes 0.1% by weight of octyl phenoxy-poly(ethylenoxy) ethanol and 0.4% by weight of Thomas Liquid cleaner and is at a temperature of about 70°C. The mat is kept in that solution for about 30 minutes, then withdrawn, rinsed in deionised water at 60°C until the wash water is free of foam and then immersed in a second treating solution. The second treasting solution is an aqueous solution of 1.3% by weight of glacial acrylic acid, 0.23% by weight of ceric ammonium nitrate, and 0.43% by weight of sulphuric acid. The second treating solution is maintained at a temperature of about 70°C and the mat is kept immersed in the solution for 30 minutes, then withdrawn and washed free of homopolymers and unreacted monomer, using a dilute aqueous solution of 0.1% octyl phenoxy-poly(ethyleneoxy) ethanol at 70°C. The nylon mat is then washed free of that surfactant using deionised water at about 70°C then dried in a circulating air oven at about 50°C and subsequently cold calendered at sufficient pressure to reduce the thickness from 7.5 mils (190 microns) to 4.4 mils (110 microns).

The mat is then placed as separator in a secondary silver-zinc cell containing 40% aqueous potassium hydroxide electrolyte and is used in that cell at 23°C under normal operating conditions, including the following:

The cell is charged at a 2 ampere rate to a maximum voltage of 2.02 volts, then discharged at a 30 ampere rate to a minimum voltage of 1.20 V.

Four cells with the above described separators were given 18 cycles under the above conditions with satifactory results. It was observed that the mat was easily wetted by the aqueous potassium hydroxide solution, that it retained a substantial portion of the electrolyte and was chemically stable over 113 days of use in the cell.

The following supplemental tests illustrate the improved properties of this mat: the time for a drop of 45% potassium hydroxide electrolyte to be absorbed by the calendered mat (3 inch (7.5 cm) fall) which should be 100 seconds maximum was as follows:

original fabric: did not wet;

scoured fabric: did not wet;

scoured and grafted: 7 to 2 seconds Av.14 seconds;

scoured, grafted and calendered; 28 to 54 seconds Av.43 seconds.

The density of the original non-woven fabric was increased from 0.18 g/cc to 0.32 g/cc by the grafting and calendering process. The retention of 38% potassium hydroxide electrolyte by the grafted calendered material after soaking for one hour and draining for one minute was, 435 to 468% Av. 458%. The electrical resistance of the grafted, calendered material was 3 to 4 milliohms per square inch; compared with a desired maximum of 15 milliohms per square inch. The wet thickness of the grafted, calendered mat was 3.1 to 3.7 (78 to 94 microns Av. 3.4 mils (86 microns) after soaking for one hour in 38% potassium hydroxide electrolyte.

In a parallel test, a nylon mat of the same composition as set forth above but untreated with either the first or second above-named treating solutions, is incorporated as a separator into a silver-zinc primary cell identical to that specified above and is subjected to identical operating conditions. This control separator causes a very poor charge acceptance, also low voltage and severe heating during the high rate discharge.

Accordingly, the desirability of the vinyl monomer-graft nylon mat, in contrast to the untreated mat is clearly shown. In further tests, the conditions and components specified above utilised but substituting polyhexamethylene adipamide for the polycaprolactam, substituting sodium dodecyl diphenyl oxide disulphonate for the octylphenoxy-poly (ethyleneoxy) ethanol, substituting methacrylic acid for the acrylic acid and potassium permanganate for the ceric ammonium nitrate. When the cold calendered treated mat is tested, the same type of silver zinc cell as specified above in this example is used but it contains sodium hydroxide electrolyte in place of potassium hydroxide. Generally comparable results are obtained to those specified above in this example for the treated mat. Thus, improved wettability of the mat by aqueous sodium hydroxide solution is shown, with improved retention of the electrolyte and improved chemical stability of the mat over a long period of time of use in the cell. Accordingly, the advantages obtained by the present method are demonstrated.

EXAMPLE II

Nylon mats, prepared as in Example I, were placed as separators in a series of primary 6.0 ampere-hour silver-zinc cells containing 40% aqueous potassium hydroxide and were used in those cells under normal operating conditions. All cells containing grafted calendered nylon separators performed satisfactorily, while cells with untreated nylon did not wet properly and failed.

The above specific examples clearly show that a substantial improvement in the water wettability of a nylon separator for use in an alkaline battery can battery can be provided through the use of the present method. The improved separator of the present invention demonstrates improved electrolyte absorptivity so that degradation of the nylon in the electrolyte and battery failures due to drying out of the separator do not occur. Moreover, the battery start-up time is faster because of the improved wettability of the separator.

CLAIMS

1. An alkaline battery separator comprising a non-woven fibrous polyamide separator having sufficient, preferably 2.5 to 7.5% by weight, hydrophilic vinyl monomer grafted onto said polyamide to improve the water wettability of said polymer in alkaline battery electrolyte, said separator having improved electrolyte absorptivity.

2. A separator according to claim 1, wherein said hydrophilic vinyl monomer is selected from acrylic acid, methacrylic acid, N,N-dimethyl acrylamide, diacetone acrylamide, N-(isobutoxymethyl) acrylamide and mixtures thereof.

3. A separator according to claim 1 or claim 2, wherein said polyamide is a nylon selected from polycaprolactam, poly-hexamethylene adipamide, and mixtures thereof.

4. A separator according to any one of claims 1 to 3, wherein said separator is a mat of fibers having an average diameter of about 0.05 - 50 microns, said mat having a thickness of about 5 - 25 mils and a porosity of more than about 50%, and wherein said mat is essentially free of contaminants, wetting agents and surfactants.

5. A method of making an alkaline battery separator, which method comprises contacting a non-woven fibrous polamide separator preferably comprising a mat of fibers having an average diameter of about 0.05-50 microns, said mat having a thickness of 5-25 mils, a porosity in excess of about 50% and a pore size of lessw than about 50 microns with an aqueous solution of a hydrophilic vinyl monomer and a selected redox catalyst for a time and at a temperature sufficient to graft enough of said monomer onto the chain of said polamide to improve the water wettability and stability of said separator in alkaline battery electrolyte.

6.   A method according to claim 5, wherein said separator is initially contacted at elevated temperature, preferably approximately 70%, with a hydrotrope/detergent, preferably selected from sodium dodecyl diphenyl oxide disulphonate, sodium lauryl ether sulphate, sodium tridecyl sulphate, octylphenoxy-poly (ethyleneoxy) ethanol and mixtures thereof for a time, preferably about 30 minutes, sufficient to improve the ease of grafting said vinyl monomer to said polyamide, and preferably then rinsed free of detergent preferably in deionised water prior to grafting.

7.   A method according to claim 5 or claim 6, wherein said polyamide comprises a nylon selected from poly-caprolactam, polyhexamethylene adipamide, and mixtures thereof.

8.   A method according to any one of claims 5 to 7, wherein said hydrophilic vinyl monomer is selected from acrylic acid, methacrylic acid, N,N-dimethyl acrylamide, diacetone acrylamide, N-(isobutoxymethyl) acrylamide and mixtures thereof.

9.   A method according to any one of claims 5 to 8, wherein said redox catalyst is selected from the group consisting of a metal salt in an oxidised state but capable of existing in more than one valence state, complex of metal in an oxidised state but capable of existing in more than one valence state and mixtures thereof, and is preferably selected from potassium permanganate, persulphates, ceric salts, and mixtures thereof in dilute sulphuric or nitric acid solution.

10.  A method according to any one of claims 5 to 9, wherein said contacting of said polyamide with said monomer and redox catalyst is carried out at about 70°C to 80°C, for about 30 minutes, after which said polyamide separator is washed free of homopolymer and unreacted monomer through the use of an aqueous solution of surfactant preferably at about 70°C, then washed free of said surfactant by deionised water and then dried, and preferably cold calendered to desired thickness.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | BE-A- 623 166 (YARDNEY INTERNATIONAL CORP.) * Page 3, lines 22-33; page 4, lines 6-20; page 6, lines 9-14; page 8, lines 12-20; page 12, line 25 - page 13, line 18; page 18, lines 11-32; page 19, lines 18-31; examples 1,8,11 * | 1-3,5-9 | H 01 M 2/16 |
| X | US-A-3 330 702 (HOROWITZ) * Column 1, lines 55-61; column 1, line 70 - column 2, line 7; column 2, lines 27-31 * | 1-3,5,7-9 | |
| X | CHEMICAL ABSTRACTS, vol. 89, no. 20, 13th November 1978, page 157, abstract no. 166165v, Columbus, Ohio, US; & JP-A-78 16 035 (MATSUSHITA ELECTRIC INDUSTRIAL CO. LTD.) 29-05-1978 * Whole abstract * | 1,2 | |
| X | US-A-3 615 865 (WETHERELL) * Claim 1 * | 1,2 | |
| | --- -/- | | |

**TECHNICAL FIELDS SEARCHED (Int. Cl.4)**

C 25 B
D 06 M
H 01 M

The present search report has been drawn up for all claims

| Place of search | Date of completion of the search | Examiner |
|---|---|---|
| THE HAGUE | 16-01-1987 | COOK S.D. |

European Patent Office

**EUROPEAN SEARCH REPORT**

Application number

EP 86 30 6734

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int Cl.4) |
|---|---|---|---|
| A | JOURNAL OF THE SOCIETY OF DYERS AND COLOURISTS, vol. 82, no. 7, July 1966, pages 257-264, The Society of Dyers and Colourists, Bradford, GB; S. HAWORTH et al.: "Cerium-initiated polymerisation of some vinyl compounds in polyamide fibres" * Pages 258-259 * | 5-10 | |
| A | US-A-3 344 013 (FAHRBACH) * Column 2, lines 43-68; column 5, lines 8-27 * | 1-4 | |

TECHNICAL FIELDS SEARCHED (Int. Cl.4)

The present search report has been drawn up for all claims

| Place of search | Date of completion of the search | Examiner |
|---|---|---|
| THE HAGUE | 16-01-1987 | COOK S.D. |